Europäisches Patentamt

European Patent Office

Office européen des brevets

(19)

(11) EP 0 748 026 B1

(12) **EUROPEAN PATENT SPECIFICATION**

(45) Date of publication and mention
of the grant of the patent:
**13.05.1998 Bulletin 1998/20**

(51) Int Cl.⁶: **H02K 1/27**, H02P 9/38

(21) Application number: **96109066.9**

(22) Date of filing: **05.06.1996**

(54) **Alternator for vehicles with SiC switching transistor**

Fahrzeuggenerator mit SiC-Schalttransistoren

Alternateur de véhicules comprenant des transistors de commutation au silicium-carbide

(84) Designated Contracting States:
**DE FR GB IT**

(30) Priority: **06.06.1995 JP 139519/95**

(43) Date of publication of application:
**11.12.1996 Bulletin 1996/50**

(73) Proprietor: **DENSO CORPORATION**
**Kariya-City, Aichi-Pref. (JP)**

(72) Inventors:
• **Umeda, Atsushi**
  **Kariya-city, Aichi-pref., 448 (JP)**
• **Taniguchi, Makoto**
  **Kariya-city, Aichi-pref., 448 (JP)**
• **Kusase, Shin**
  **Kariya-city, Aichi-pref., 448 (JP)**

(74) Representative: **KUHNEN, WACKER & PARTNER**
**Alois-Steinecker-Strasse 22**
**85354 Freising (DE)**

(56) References cited:
  EP-A- 0 657 992          GB-A- 2 281 665
  US-A- 5 233 215          US-A- 5 306 977

• PROCEEDINGS OF THE 28TH INTERSOCIETY
  ENERGY CONVERSION ENGINEERING
  CONFERENCE, vol. 1, no. 8, August 1993,
  ATLANTA, GEORGIA, pages 1249-1254,
  XP000431000 J.W.PALMOUR: "6H-Silicium
  Carbide Power Devices for Aerospace
  Applications"
• RESEARCH DISCLOSURE, vol. 340, no. 003,
  August 1992, EMSWORTH, GB, XP000328043
  "Alternating current generator"
• PATENT ABSTRACTS OF JAPAN vol. 16, no. 412
  (E-1256), 31 August 1992 & JP-A-04 138030
  (HONDA MOTOR CO LTD), 12 May 1992,

## Description

### BACKGROUND OF THE INVENTION

#### 1. Field of the Invention:

The present invention relates to an alternating current generator (alternator) and more particularly to an on-vehicle alternator that has been decreased in internal iron loss and improved in the current generation efficiency, the applied range thereof extending from an ordinary engine-driven alternator to an alternator enabling generated power driving that regenerates power used at a vehicle-brake time or an alternator that causes power regeneration with respect to vehicle travel motor.

#### 2. Related Arts:

With a recent demand for decrease in the fuel consumption of vehicles, there has been an increasing demand for enhancement of the current generation efficiency. In order to realize enhancement thereof, it is necessary to decrease the loss that is produced during current generation and therefore to decrease the iron loss that occupies a large proportion of this loss.

As well known, in the case of a synchronous generator, the iron loss WF is produced mainly within the stator core and, as is expressed by the equation (1), the iron loss WF becomes a function of the frequency f of variations in the magnetic flux crossing the stator core and the maximum magnetic flux density Bm thereof.

$$WF = \sigma h \cdot f \cdot Bm^2 + \sigma e \cdot f^2 \cdot Bm^2 \qquad (1)$$

The first member of this equation represents the hysteresis loss, the second member thereof represents the eddy current loss and $\sigma h$ and $\sigma e$ represent constants that are determined depending upon the base material employed, respectively.

Accordingly, in order to decrease the iron loss WF, it is necessary to decrease the above frequency f and maximum magnetic flux density Bm to the greatest possible extent.

Assuming that the rotation-angular velocity of the rotor be represented by $\omega$, as is expressed by the equation (2), the magnetic flux quantity $\Phi(t)$ traversing the stator core contains higher harmonic components that are twice or three times as high as the fundamental frequency.

$$\Phi(t) = \Phi_0 \{ \sin \omega t + k_1 \sin (2\omega t + \sigma_1)$$
$$+ k_2 \sin (3\omega t + \sigma_2) \cdots \} \qquad (2)$$

The reason why higher harmonic components appear in the variation in the magnetic flux quantity $\Phi(t)$ is due to the magnetic field formed by the magnetic pole core of the rotor not exhibiting a sinewave-like gentle variation but exhibiting a distortion. The frequency f becomes substantially high due to this higher harmonic components, with the result that the iron loss becomes large.

Conventionally, in order to make smooth this variation in magnetic flux, measures are taken of performing chamfering with respect to the surface of the magnetic core or of making the skew of the magnetic pole large while, on the other hand, in order to make the maximum magnetic flux density low, measures are taken of enlarging the sectional area of the stator core.

However, measures taken of chamfering the magnetic core conversely decrease the generated current output due to a decrease in the surface area of the magnetic core, with the result that a limitation was imposed on chamfering in terms of the trade-off.

Also, measures taken of enlarging the sectional area of the stator core is followed by a decrease in the winding space of the stator coil and in hence followed by a decrease in the generated current output due to the resulting increase in the output impedance of the alternator, with the result that in this case also a limitation was imposed on this enlargement in terms of the trade-off.

Another measure to make smooth the variation in magnetic flux is proposed in GB-A-2281665, whereby permanent magnets are inserted between the Lundell type magnetic poles of the rotor.

### SUMMARY OF THE INVENTION

In view of the above-mentioned problem, an object of the present invention is to provide an alternator wherein both the magnetic flux variation frequency and the maximum magnetic flux density are sufficiently decreased with no limitation following in terms of the trade-off to thereby make the internal iron loss small and thereby enhance the current generation efficiency.

In order to attain the above object, according to the present invention, there is provided an alternator according to claim 1.

Particular embodiments of the invention are defined in dependent claims 2 to 8.

### BRIEF DESCRIPTION OF THE DRAWINGS

These and other objects, features and characteristics of the present invention will be appreciated from a study of the following detailed description, the appended claims, and drawings, all of which form a part of this application. In the drawings:

FIG. 1 is a semi-sectional side view of an alternator according to an embodiment of the present invention, the section of the rotor portion being taken along the line I-I of FIG. 2;

FIG. 2 is a perspective view of an entire rotor in the embodiment of the present invention;

FIG. 3 is a perspective view of an entire retainer body in the embodiment of the present invention;

FIG. 4 is a sectional view of an outer periphery of the rotor in the embodiment of the present invention, the section being taken along the line IV-IV of FIG. 2;

FIG. 5 is a graph illustrating the variation in magnetic flux at the outer periphery of the rotor in the embodiment of the present invention;

FIG. 6 is an electric circuit diagram of the alternator according to the embodiment of the present invention;

FIG. 7 is a sectional view of a MOS type transistor in the embodiment of the present invention;

FIG. 8 is a graph illustrating a VDS-ID curve of the MOS type transistor in the embodiment of the present invention;

FIG. 9 is a graph illustrating a withstand voltage - on-resistance curve of the MOS type transistor in the embodiment of the present invention;

FIG. 10 is a voltage vector diagram in the embodiment of the present invention; and

FIG. 11 is a graph illustrating the variation in magnetic flux at the outer periphery of a conventional rotor.

## DETAILED DESCRIPTION OF THE PRESENTLY PREFERRED EXEMPLARY EMBODIMENTS

As described above, in order to decrease both the magnetic flux variation frequency and the maximum magnetic flux density sufficiently with no limitation following in terms of the trade-off, an alternator according to the present invention comprises: a rotor wherein Lundell type magnetic poles that are polarized by a rotor coil to alternately different polarities are circumferentially disposed on an outer periphery thereof at prescribed equi-angular intervals; a permanent magnet which is disposed between the Lundell type magnetic poles and whose both side faces as viewed circumferentially are polarized respectively to the same polarities as those of adjacent respective Lundell type magnetic poles to thereby cause the magnetic flux directed toward a stator coil to exhibit a circumferential gentle variation in polarity; and a rectifying switching means constructed using a MOS type transistor that converts an alternating current voltage generated in the stator coil to a direct current voltage to thereby charge a battery by the current of the stator coil.

According to this construction, since the polarity of the magnetic flux, which is directed toward the stator coils, is smoothly varied in the circumferential direction due to the permanent magnet provided between the Lundell type magnetic poles, the higher harmonic components in the variations in the magnetic flux is removed, with the result that the iron loss in the stator core is decreased.

Also, since the rectifying switching means is constructed using the MOS type transistor whose on-resistance is small, it is possible to decrease the generated current voltage by the extent to which the voltage drop is decreased by the rectifying switching means (called also "rectifier"), whereby the maximum magnetic flux density proportionate thereto is decreased. As a result, similarly, the iron loss in the stator core is decreased.

Further, since the generation of heat from the rectifying switching means is decreased, it is possible to realize making compact in size of the entire rectifying means by miniaturization of the radiation fin, etc.

Also, the alternator according to the present invention can be made up into a polyphase alternating current alternator. In a case of three-phase alternating current alternator, for example, the above-mentioned construction is constructed as follows: the stator coil is provided for each of three phases; three pairs of the MOS type transistors, each pair being of a series-connected MOS type transistor, are connected in parallel with each other between terminals of the battery; and the stator of each phase is connected between points of connection of the paired MOS type transistors. According to this construction, it is possible to decrease, in the three-phase alternating current alternator, the loss of the current generated therefrom.

It is to be noted the following. As the MOS type transistor it is suitable to use the one formed in the monocrystalline SiC material. This is because the MOS type transistor made using the SiC material can have its on-resistance decreased compared to the one made using ordinary Si material even after having ensured the required breakdown voltage. As a result, the generated current voltage and the maximum magnetic flux density are further decreased with the result that the iron loss in the stator core can be made to be sufficiently small.

Also, in the above-mentioned alternator, the permanent magnet preferably is accommodated within a resin made retainer body having heat insulation property and provided between the Lundell type magnetic poles. According to this construction, since the heat generated in the Lundell type magnetic pole does not transfer to the permanent magnet provided within the retainer body, it is possible to prevent high temperature demagnetization due to a rise in the temperature of the permanent magnet, with the result that there is the effect of the variation in magnetic flux being maintained to be smooth at even an elevated temperature.

Meanwhile, the retainer body preferably is constructed in the form of a ring that is periodically folded back in such a manner as to extend between the Lundell type magnetic poles that alternately project from a front and a rear side face of the rotor onto an outer peripheral surface thereof, whereby the permanent magnet is accommodated in each folded back leg portion of the retainer body. According to this construction, a plurality of the permanent magnets can be integrally accommodated in the retainer body, with the result that assembling of the permanent magnets and storage thereof are easy. Also, since the Lundell type magnetic poles are each surrounded at their three aspects by the retainer body having the heat insulation property, excessive dissipation of heat therefrom is prevented and therefore the electrical resistance of the surface thereof increases due to moderate elevation in the temperature thereof, with the result that generation of the eddy current is prevented. As a result, the iron loss in the Lundell type magnetic poles becomes also small.

Further, flanges preferably are provided with respect to the Lundell type magnetic poles in such a manner as to project from at least circumferential both side edges thereof and these flanges preferably are made to abut on an outer peripheral surface of the retainer body. Due to the existence of these flanges the variations in magnetic flux at the boundaries between the Lundell type magnetic poles and the permanent magnet become further smoothed. Also, due to the flanges, the retainer body can be reliably positioned.

In the above-mentioned various constructions, an anisotropic ferrite magnet or a resin magnet containing rare earth magnet powder can be applied as the permanent magnet. That is, by using an anisotropic magnet made of ferrite that is substantially an electrical insulator, or by using a resin magnet containing rare earth magnet powder, as the permanent magnet, no eddy current is caused to be generated in the permanent magnet with the result that decrease in the loss is furthered.

A concrete embodiment of the present invention as illustrated in the drawings will now be explained.

First, the structure and operation for decreasing the frequency of variations in the magnetic flux will be explained.

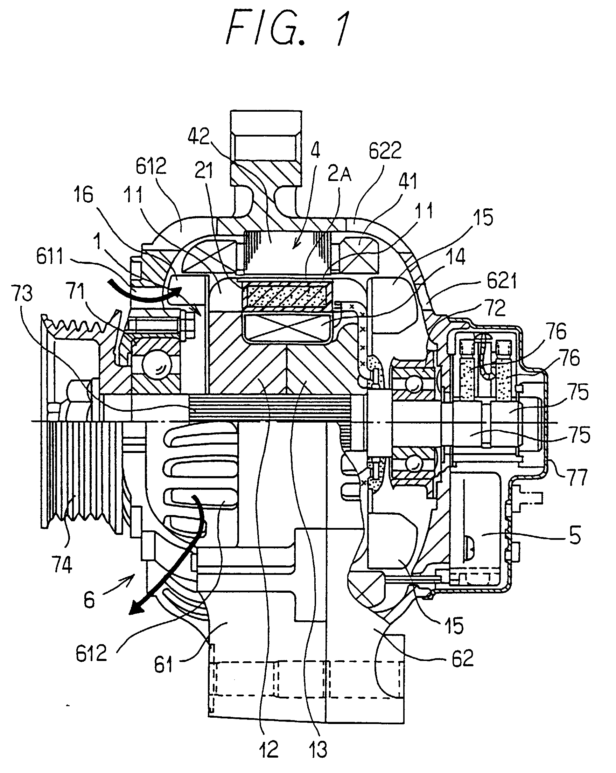

FIG. 1 is a vertical sectional view illustrating an entire structure of an on-vehicle alternator. A frame 6 of the alternator is constructed in such a manner that a drive frame 61 and a rear frame 62 abut on each other. At a center of the frame 6 there is provided a shaft 73 in such a manner as to be supported by bearings 71 and 72. The shaft 73 is rotated by an engine power inputted to the alternator via a pulley 74 mounted on a front end (the left end of the illustration) thereof.

To the shaft 73 there is fixed a Lundell type rotor core that is constructed of a front core 12 and a rear core 13 made to abut thereon. Around the Lundell type rotor core there is wound a rotor coil 14. An anisotropic permanent magnet 2A made of ferrite material, that is embedded in a retainer body 21 made of resinous material such as PPS (polyphenylene sulfide) is disposed in the proximity to an outer periphery of the rotor coil 14.

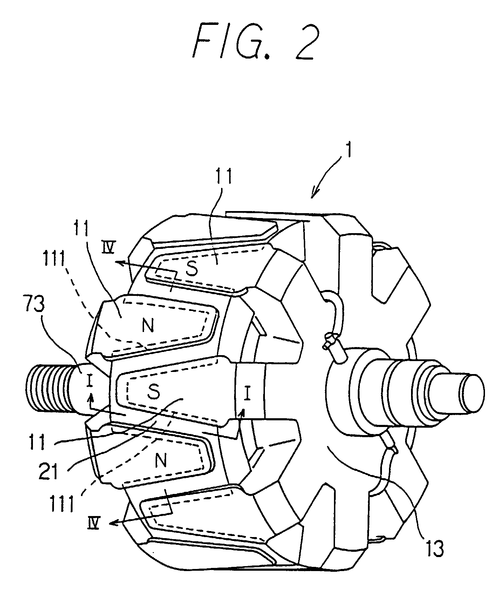

The outer appearance of a rotor 1 is illustrated in FIG. 2. From the front core 12 and rear core 13 there are extended alternately Lundell type claw shaped magnetic poles 11 from front and rear side faces thereof to the outer peripheral surface in such a manner that the magnetic poles 11 are bent and projected. The claw shaped magnetic poles 11 are energized to alternately different polarities N and S by supply of current to the rotor coil 14 (FIG. 1). Also, the retainer body 21 is provided in such a manner as to extend into gaps between the Lundell type claw magnetic poles 11.

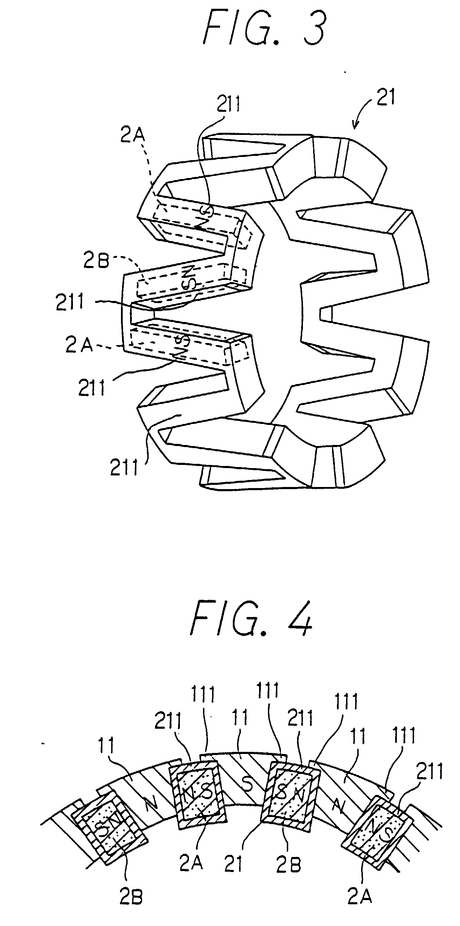

The retainer body 21 as a whole is in the form of a ring as illustrated in FIG. 3 and is folded back at prescribed space intervals into inverted V shapes and extends circumferentially in such a manner as to follow the gaps between the Lundell type claw magnetic poles 11 (FIG. 2). Permanent magnets 2A and 2B are located within folded back leg portions 211 (in FIG. 3 only three permanent magnets are illustrated). As illustrated in FIG. 4, the permanent magnets 2A and 2B are polarized so that both side faces thereof as viewed circumferentially have the same polarities as those of adjacent Lundell type claw shaped magnetic poles 11. The intensity of the magnetic force thereof is to the same extent as that corresponding to the intensity of the magnetic force developed in the Lundell type claw shaped magnetic poles 11 that are adjacent thereto via side walls of the retainer body 21.

It is to be noted that as illustrated in FIG. 4 flanges 111 each of a prescribed width are projected from circumferential both side edges of an outer peripheral end (the upper end of the illustration) of each claw shaped magnetic pole 11 are projected so that at least part thereof may overlap upon the permanent magnets disposed in the retainer body 21 in the radial direction, whereby both side edges of each leg portion 211 of the retainer body 21 are positioned by these flanges 111.

In FIG. 1, a ring shaped stator 4 is provided in the proximity to an outer periphery of the rotor 1 and slots are formed in a stator core 42 circumferentially in equiangular distant manner. Stator coils 41 are wound in a known structure with respect to these slots. When the rotor 1 is rotated, the magnetic fluxes developed in the magnetic pole cores 11 and permanent magnets 2A and 2B cross the stator coils 41, whereby alternating current voltages are developed therein.

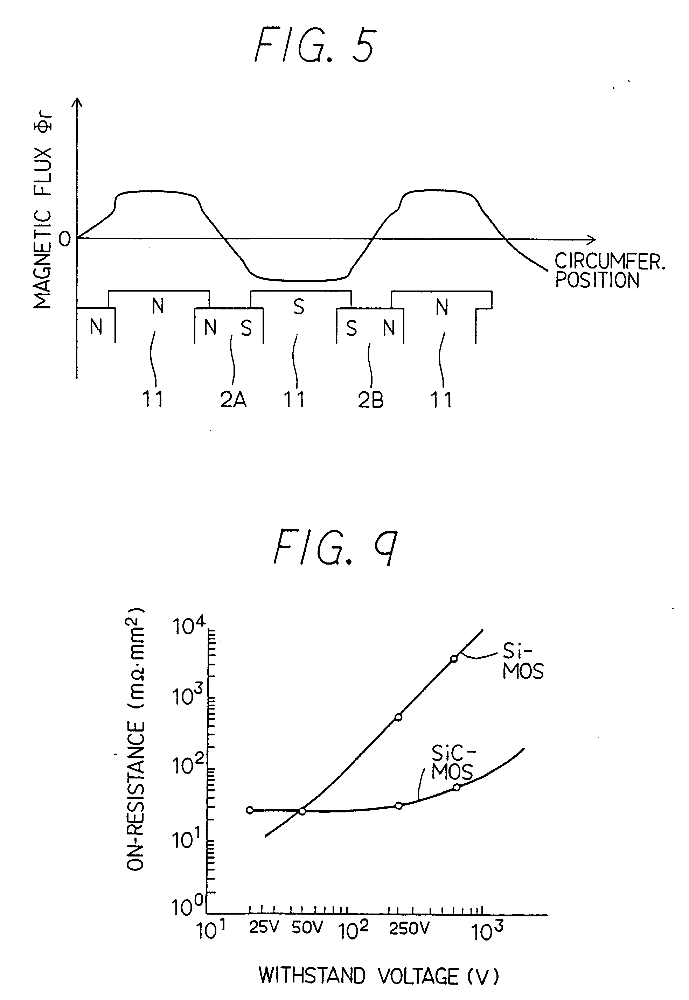

The variation in the magnetic flux quantity $\Phi r$ crossing the stator coil 41 in this case is illustrated in FIG. 5. It is to be noted that in FIG. 11 there is illustrated the variation in the magnetic flux quantity $\Phi r$ resulting from the rotation of a conventional rotor provided with no permanent magnets 2A and 2B. As is known from the figures, sharp variations in the magnetic flux quantity $\Phi r$ (FIG. 11) that is developed in the magnetic pole cores 11 and is alternately different in polarity are inverted by being gently linked with each other by the magnetic fluxes of the permanent magnets 2A and 2B, exhibiting a state of variation approximate to that of a sine wave (FIG. 5).

Accordingly, the higher harmonic components appearing in the variation in magnetic flux that is shown in the abovementioned equation (2) become sufficiently small, whereby the frequency f in the above-mentioned equation (1) becomes small. As a result, the iron loss of the stator core decreases with the result that the power generation efficiency increases.

Particularly, in this embodiment, since the flanges 111 are formed with respect to both side edges of the magnetic pole cores 11 so that part thereof may overlap upon the permanent magnets in the radial direction, the continuity of the magnetic flux at the boundaries between the magnetic pole core 11 and the permanent magnets 2A and 2B are improved and, on the other hand, the permanent magnets 2A and 2B are reliably positioned by the flanges 111.

Also, the permanent magnets 2A and 2B are each located within the resin made retainer body 21 having heat insulation property, they are free from the heat generated from the claw shaped magnetic poles 11, with the result that it is possible to prevent high temperature demagnetization due to a rise in the temperature. As a result, it is possible to maintain smooth variations in the magnetic flux at even a high temperature. Also, since a plurality of the permanent magnets 2A and 2B are integrally accommodated within the retainer body 21, assembling thereof into between the front core 12 and rear core 13 of the rotor 1 is easy and time and labor for storage of the parts are also decreased.

Also, since the claw shaped magnetic poles 11 are each surrounded at their three aspects by the retainer body 21, the temperature thereof is moderately increased due to the heat generated therein and as a result the electrical resistance of their surfaces increases, which results in a decrease in the eddy current. As a result of this also, decrease in the within-alternator loss is realized.

Further, since ferrite is substantially an electrical insulator, the eddy current developed in the permanent magnets is light. As a result of this also, decrease in the within-alternator loss is furthered.

In FIG. 1, air blast fans 15 and 16 are provided on front and rear faces of the rotor 1. As the rotor 1 rotates, external air is sucked in from air intake ports 611 and 621 plurally provided in the front face of the drive frame 61 and rear face of the rear frame 62 (arrow in the figure). The external air having been sucked in cools the rotor coil 14, stator coils 41, voltage regulator 5 as described later, etc. and then is exhausted from exhaust ports 612 and 622 plurally provided in the outer peripheral surfaces of the respective frames 61 and 62.

On the outer periphery of a rear end of the shaft 73 projecting from the rear frame 62 there is provided a slip ring 75 for supplying current to the rotor coil 14, a brush 76 being in contact therewith. Also, a covering member 77 is provided in such a manner as to cover the rear end portion of the shaft 73. Inside this covering member 77 there is accommodated the voltage regulator 5 that contains a full-wave rectifier 51 as will have its detail described later.

Next, the structure and operation for decreasing the maximum flux density will be explained.

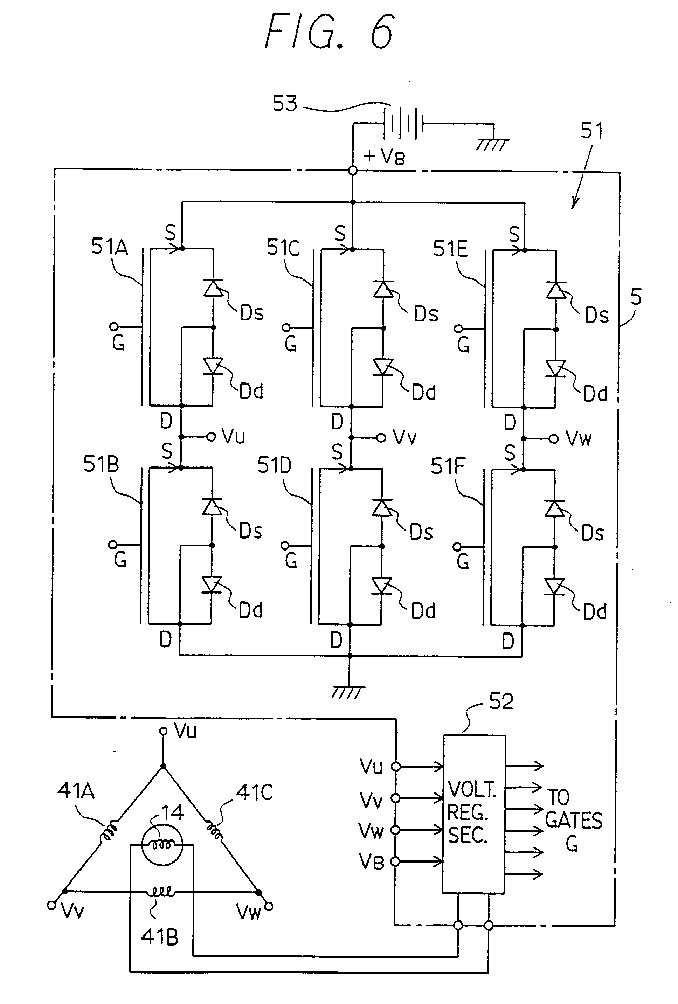

FIG. 6 illustrates an electric circuit of the alternator that is constructed to charge a battery 53. A voltage regulating section 52 within the voltage regulator 5 reads the voltage of the battery 53 and performs on/off control with respect to excitation of the rotor coil 14 so as to make the voltage of the battery 53 fixed.

Actually, as illustrated, the stator coil is constructed of Delta-connected three-phase coils 41A, 41B and 41C. The output terminal voltages Vv, Vu and Vw of these coils 41A to 41C are input to respective points of connection between three pairs of MOS type transistors 51A to 51F that constitute the three-phase full-wave rectifier and are also input to the voltage regulating section 52.

That is, in the respective transistors, the drains D of the high side ones 51A, 51C and 51E and the sources S of the low side ones 51B, 51D and 51F are connected to each other while, on the other hand, the sources S of the high side ones 51A, 51C and 51E are connected to a high potential side of the battery 53 and the drains D of the low side ones 51B, 51D and 51F are connected to a low potential side of the battery 53. The conductions of the transistors 51A to 51F are controlled by signals input to gates G thereof from the voltage regulating section 52.

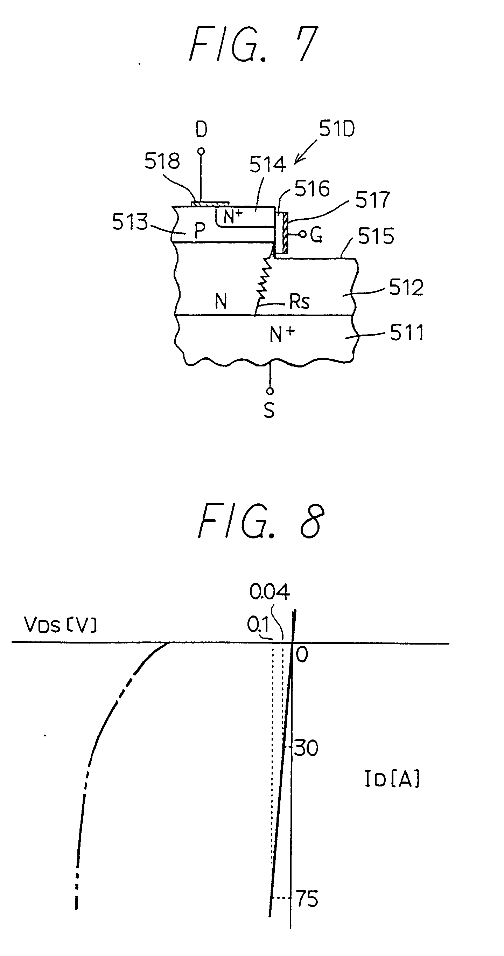

The structure of the MOS type transistors 51A to 51F are the same and this structure will be explained hereunder with reference to FIG. 7.

In the figure, an N-type voltage withstanding layer 512 is disposed on an N$^+$ type substrate 511 made using SiC by homo-epitaxial growth. On the surface portion of the N type voltage withstanding layer 512 a P-type well region 513 is formed by ion implantation of aluminum.

Further, in the surface portion of the P-type well region 513 an N$^+$ type region 514 is formed by ion implantation of nitrogen. By masking the wafer surface by resist or insulative film with only a trench forming region alone being made open, a trench 515 is formed with the use of a known dry etching technique such as R.I.E. (reactive ion etching).

Thereafter, a gate insulation film 516 that consists of a silicon oxide film, for example, is formed on the surface of the trench 515 by thermal oxidation, for example. Thereafter, an electrode 517 that consists of doped polysilicon is deposited to be disposed within the trench 515 and made to be a gate G. Thereafter, a metal electrode 518 is formed in a contacted manner on the surfaces of the N$^+$ type region 514 and P-type well region 513 and made to be a drain D. On the other hand, a metal electrode (not shown) is formed in a contacted manner on the N$^+$ type substrate 511 and made to be a source S.

Between the P-type well region 513 (i.e. the region facing the gate electrode 517) and the sources S or drain D there occur a parasitic diode Ds (see FIG. 6) on the source-connection drain-connection side and a parasitic diode Dd on the side. The parasitic diode Dd is shortcircuited and the parasitic diode Ds checks reverse flow from the battery 53.

Next, the switching operation of switching the respective MOS type transistors 51A to 51F by the voltage regulating section 52 of FIG. 6 will be explained.

The voltage regulating section 52 reads the output terminal voltages Vu, Vv and Vw of the three-phase stator coils 41A to 41C and selects from among the generated line voltages (identical to phase voltages due to the delta connection) Vu-Vv, Vv-Vw and Vw-Vu the one which is positive and higher than the terminal voltage of the battery 53.

Then, one of the high side transistors 51A, 51C and 51E and one of the low side transistors 51B, 51D and 51F are respectively made conductive and operative so that the above selected generated line voltage Vu-Vv, Vv-Vw or Vw-Vu may be applied to the battery 53. As a result of this, charging current is supplied from the selected three-phase stator coils 41A to 41C to the battery 53.

Meanwhile, in this embodiment, as stated previously, since a monocrystalline SiC is used as a base material of each MOS type transistor, the thickness and impurity concentration of the N-type voltage withstanding layer 512 can be greatly improved compared to the using of Si as a base material of each MOS type transistor.

That is, in the case of Si, the breakdown field intensity thereof is approximately $30V/\mu m$ and, assuming for brevity that the withstand voltage of 300V be undertaken by the N-type voltage withstanding layer 512, the required thickness of the voltage withstanding layer 512 is approximately 20 $\mu m$, the impurity concentration thereof is $1 \times 10^{15}$ atoms/cm$^3$ and the resistivity thereof is approximately $5\,\Omega \cdot cm$.

In contrast, the breakdown field intensity of SiC is approximately 400 $V/\mu m$ or so and therefore the required thickness of the N-type voltage withstanding layer 512 can be made to be approximately 4 $\mu m$, the impurity concentration thereof can be made to be $2 \times 10^{16}$ atoms/cm$^3$ and the resistivity thereof can be made to be approximately $1.25\,\Omega \cdot cm$.

Accordingly, the resistance of the N-type voltage withstanding layer 512 of the MOS type transistor (SiC-MOS) made using a SiC material can be decreased down to 1/20 compared to that of the N-type voltage withstanding layer of the MOS type transistor (Si-MOS) made using a Si material.

As a result, the source-side parasitic resistance Rs (see FIG. 7) of the SiC-MOS transistor is decreased down to 1/20 compared to that of the Si-MOS transistor and the channel resistance also is decreased greatly in correspondence therewith.

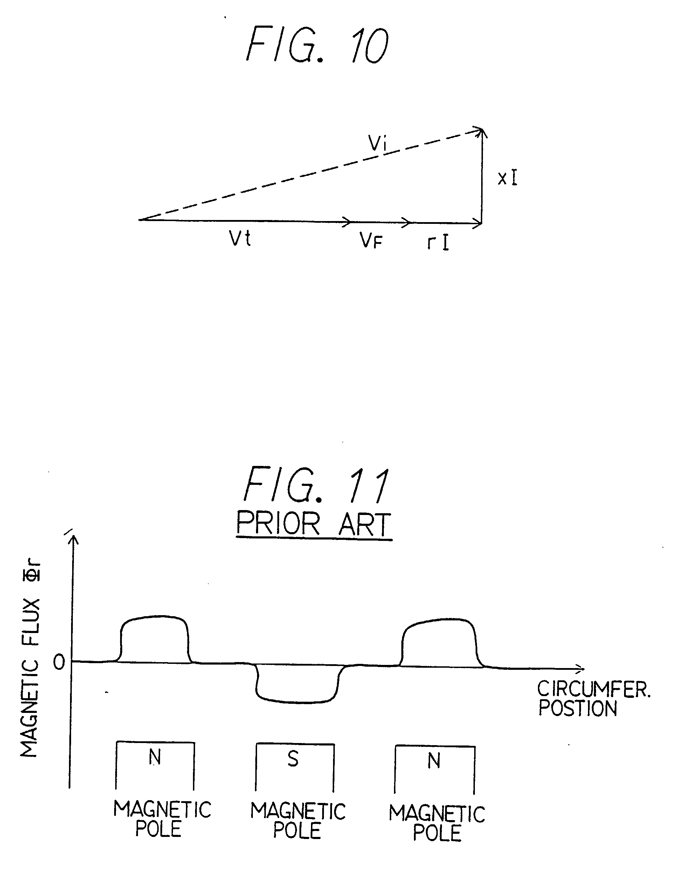

FIG. 8 illustrates an ID-VDS characteristic of SiC-MOS. It is known that as compared to the forward direction characteristic of the diode as indicated by a two-dot chain line in the figure the voltage drop VDS is small with even an output current ID of 75 A, whereby the on-resistance is low.

FIG. 9 illustrates an example of the calculated results of the specific on-resistance that is attained when the required withstand voltage of the MOS transistor has been varied. It is to be noted that this specific on-resistance is the sum of the channel resistance and the resistance Rs of the N-type voltage withstanding layer 512. Although the channel resistance fluctuates due to various factors, in a range of high withstand voltage the resistance Rs of the N-type voltage withstanding layer 512 is predominant as will be understood from the figure, namely the channel resistance per se exhibits almost no change even when the withstand voltage increases.

Accordingly, whereas in the case of Si-MOS as the withstand voltage increases from around the withstand voltage of 25 V the on-resistance increases in proportion thereto, in the case of SiC-MOS increase in the resistance of the N-type voltage withstanding layer 512 can be almost ignored up to withstand voltage of 250 V and, only thereafter, the on-resistance thereof gently increases.

As explained above, in the case of SiC-MOS, the on-resistance thereof can be made to be sufficiently small even when a large current (75 A or so) is carried therethrough while a sufficient withstand voltage is being ensured with respect to a high voltage applied thereto at a wire breakage time, with the result that it is possible to make the generated voltage of the alternator lowered. Explaining this with reference to a vector diagram of FIG. 10, the generated voltage Vi is made up of the vector sum of the voltage drop VF of the rectifier elements and the voltage drops rl and xl of the stator due to impedance that has been calculated with respect to the battery terminal voltage Vt. In this case, r represents the armature resistance, x represents the leakage reactance and l represents the armature current.

Accordingly, if the voltage drop VF of the rectifier elements becomes small, the generated current voltage Vi can be made low. It is known that this generated voltage Vi is in proportional relation to the previously stated maximum flux density Bm. Accordingly, by making the voltage drop VF sufficiently small by use of a SiC-MOS having a lower on-resistance, it is possible to make the generated voltage Vi markedly lowered and thereby make the maximum flux density Bm also lowered. This results in a small iron loss of the alternator and in hence an improvement in the generating efficiency.

Also, the heat generated from the rectifying switching means decreases due to low on-resistance of the SiC-MOS transistor. Accordingly, by miniaturization of the cooling fin, it is possible to make the whole rectifying switching means and voltage regulator compact in size to thereby ensure the area of the intake port 621 of the rear frame 62 (see FIG. 1) sufficiently and thereby enable enhancement of the cooling performance.

Additionally, although the use of SiC-MOS is most effective, the use of even Si-MOS makes the on-resistance thereof low at a time when a large current is carried therethrough compared to the use of a conventional rectifying diode, with the result that it is possible to expect a sufficient effect.

Also, as the permanent magnet, a resin magnet containing rare earth magnet powder may be used in addition to ferrite magnet.

While the present invention has been shown and described with reference to the foregoing preferred embodiments, it will be apparent to those skilled in the art that changes in form and detail may be made therein without departing from the scope of the invention as defined in the appended claims.

## Claims

1. An alternator comprising:

    a stator (4) having a stator coil (41);
    a rotor (1) comprising
    a rotor coil (14),
    Lundell type magnetic poles (11) which are disposed on an outer periphery of said rotor and along a circumferential direction of said rotor, said Lundell type magnetic poles being polarized by said rotor coil to alternately different polarities, and
    permanent magnets (2A, 2B) which are disposed between said Lundell type magnetic poles, respectively, so that both side faces of said permanent magnet (2A, 2B) in said circumferential direction are polarized to opposite polarities, and said Lundell type magnetic pole (11) and a side face of said permanent magnet (2A, 2B) which are adjacent to each other have same polarity to thereby exhibit gentle variation of magnetic flux directed toward said stator coil along said circumferential direction;

    the alternator being characterised in that

    the intensity of the magnetic force of said permanent magnet (2A, 2B) is set to the same extent as the intensity of the magnetic force developed by said Lundell type magnetic poles (11) which are adjacent thereto; and by
    a rectifier (51) constructed using a MOS type transistor (51A to 51F) that converts an alternating current generated by said stator coil to a direct current, wherein said MOS type transistor (51A to 51F) is formed using as a base material a monocrystalline SiC that is a compound of silicon (Si) and carbon (C) and is smaller in resistivity than Si.

2. An alternator according to claim 1, wherein:

    at least two sets of said stator coils (41A to 41C) are provided to generate a polyphase alternating current;

    at least two pairs of switching circuits which comprise series SiC MOS type transistors, respectively, are connected in parallel with each other between terminals for outputting said direct current; and
    said stator coils (41A to 41C) are connected to respective middle points of said series MOS type transistors.

3. An alternator according to claim 1 or 2, wherein said permanent magnets are integrally accommodated within a resin made retainer body (21) having heat insulation property and said retainer body is disposed between said respective Lundell type magnetic poles.

4. An alternator according to claim 3, wherein said retainer body (21) is shaped like a ring that is periodically folded back in such a manner as to extend between said Lundell type magnetic poles that alternately project from a front and a rear side face of said rotor along said circumferential direction; and said permanent magnets (2A, 2B) are accommodated in respective folded back leg portions (211) of said retainer body (21).

5. An alternator according to claim 3 or 4, wherein flanges (111) are provided with respect to said Lundell type magnetic poles in such a manner as to project from at least circumferential both side edges thereof and said flanges abut on an outer peripheral surface of said retainer body.

6. An alternator according to any one of claims 1 to 5, wherein said permanent magnet is an anisotropic ferrite magnet or a resin magnet containing rare earth magnet powder.

7. An alternator according to any one of claims 1 to 6, wherein said stator (4), said rotor (1) and said rectifier (51) are integrally accommodated within a frame body (6, 61, 62, 77) of said alternator.

8. An alternator according to claim 7, further comprising a cooling fan (15, 16) accommodated within said frame body.

## Patentansprüche

1. Wechselstromgenerator mit:

    einem Stator (4), der eine Statorwicklung (41) aufweist;
    einen Rotor (1), der eine Rotorwicklung (14) aufweist,
    Magnetpole (11) vom Typ Lundell, welche am äußeren Umfang des Rotors und entlang einer Umfangsrichtung des Rotors angebracht sind, wobei die Magnetpole vom Typ Lundell durch die Rotorwicklung mit abwechselnd unterschiedlichen Polaritäten polarisiert werden, und

Permanentmagnete (2A, 2B), welche jeweils zwischen den Magnetpolen vom Typ Lundell derart angeordnet sind, daß beide Seitenflächen des Permanentmagnets (2A, 2B) in der Umfangsrichtung mit entgegengesetzten Polaritäten polarisiert sind und der Magnetpol (11) vom Typ Lundell und eine Seitenfläche des Permanentmagnets (2A, 2B), welche zueinander benachbart sind, die gleiche Polarität aufweisen, um dadurch eine schwache Änderung des magnetischen Flusses zu zeigen, der entlang der Umfangsrichtung in Richtung der Statorwicklung hin gerichtet ist;

wobei der Wechselstromgenerator dadurch gekennzeichnet ist, daß die Intensität der magnetischen Kraft des Permanentmagneten (2A, 2B) auf das gleiche Ausmaß eingestellt wird, wie die Intensität der magnetischen Kraft, die durch die Magnetpole (11) vom Typ Lundell entwickelt wird, welche dazu benachbart sind; und daß

ein Gleichrichter (51) unter Verwendung eines Transistors vom Typ MOS (51A bis 5F) aufgebaut ist, der einen durch die Statorwicklung erzeugten Wechselstrom in einen Gleichstrom wandelt, wobei der Transistor vom Typ MOS (51A bis 51F) unter Verwendung von monokristallinem SiC als Basismaterial ausgebildet ist, das eine Verbindung aus Silizium (Si) und Kohlenstoff (C) ist, und in seinem spezifischen elektrischen Widerstand kleiner als Si ist.

2. Wechselstromgenerator nach Anspruch 1, bei dem:

mindestens zwei Sätze der Statorwicklungen (41A bis 41C) vorgesehen sind, um einen mehrphasigen Wechselstrom zu erzeugen; mindestens zwei Paar Schaltnetze, welche jeweils in Serie geschaltete Transistoren vom Typ MOS aufweisen, zwischen Anschlüssen zum Ausgeben des Gleichstroms parallel miteinander verbunden sind; und die Statorwicklungen (41A bis 41C) mit den jeweiligen Mittelpunkten der in Serie geschaltete Transistoren vom Typ MOS verbunden sind.

3. Wechselstromgenerator nach Anspruch 1 oder 2, bei dem die Permanentmagnete innerhalb eines aus Harz hergestellten Aufnahmekörpers (21), der eine Wärmeisolationseigenschaft aufweist, integral untergebracht sind und der Aufnahmekörper zwischen den jeweiligen Magnetpolen vom Typ Lundell angeordnet ist.

4. Wechselstromgenerator nach Anspruch 3, bei dem der Aufnahmekörper (21) wie ein Ring geformt ist, der periodisch in einer derartigen Weise zurückgeschlagen ist, daß er sich zwischen den Magnetpolen vom Typ Lundell auszudehnen, die entlang der Umfangsrichtung abwechselnd aus der Vorder- und Rückseitenfläche des Rotors hervorragen; und die Permanentmagnete (2A, 2B) in jeweiligen zurückgeschlagenen Schenkelabschnitten (211) des Aufnahmekörpers (21) untergebracht sind.

5. Wechselstromgenerator nach Anspruch 3 oder 4, bei dem Flansche (111) in Bezug auf die Magnetpole vom Typ Lundell in einer derartigen Weise vorgesehen sind, daß sie mindestens aus deren beiden Umfangsseitenkanten herauszuragen, und die Flansche grenzen an die äußere Umfangsoberfläche des Aufnahmekörpers.

6. Wechselstromgenerator nach einem der Ansprüche 1 bis 5, bei dem der Permanentmagnet ein anisotroper Ferritmagnet ist oder ein Harzmagnet, der Magnetpulver aus seltene Erden enthält.

7. Wechselstromgenerator nach einem der Ansprüche 1 bis 6, bei dem der Stator (4), der Rotor (1) und der Gleichrichter (51) innerhalb eines Rahmenkörpers (6, 61, 62, 77) des Wechselstromgenerators integral untergebracht sind.

8. Wechselstromgenerator nach Anspruch 7, der weiter einen Ventilator (15, 16) aufweist, der in dem Rahmenkörper untergebracht ist.

**Revendications**

1. Alternateur comprenant :

un stator (4) comportant un bobinage de stator (41),
un rotor (1) comprenant
un bobinage de rotor (14),
des pôles magnétiques du type de Lundell (11), qui sont disposés sur la périphérie extérieure dudit rotor et suivant la direction circonférentielle dudit rotor, lesdits pôles magnétiques du type de Lundell étant polarisés par ledit bobinage de rotor à des polarités différentes en alternance, et
des aimants permanents (2A, 2B) qui sont disposés entre lesdits pôles magnétiques du type de Lundell, respectivement, de sorte que les deux faces latérales dudit aimant permanent (2A, 2B) dans ladite direction circonférentielle soient polarisées à des polarités opposées, et que ledit pôle magnétique du type de Lundell (11) et une face latérale dudit aimant permanent (2A, 2B) qui sont adjacents l'un à l'autre, présentent la même polarité, afin de présenter ainsi une variation régulière du flux magnétique orienté vers ledit bobinage de stator suivant ladite direction circonférentielle,

l'alternateur étant caractérisé en ce que l'intensité de la force d'attraction magnétique dudit aimant permanent (2A, 2B) est établie à la même valeur que l'intensité de la force d'attraction magnétique développée par lesdits pôles magnétiques du type de Lundell (11) qui sont adjacents à celui-ci, et par

un redresseur (51) construit en utilisant un transistor de type MOS (51A à 51F) qui convertit un courant alternatif généré par ledit bobinage de stator en courant continu, dans lequel ledit transistor de type MOS (51A à 51F) est formé en utilisant comme matériau de base un SiC monocristallin qui est un composé de silicium (Si) et de carbone (C) et présente une plus faible résistivité que le Si.

2. Alternateur selon la revendication 1, dans lequel :

au moins deux ensembles desdits bobinages de stator (41A à 41C) sont prévus afin de générer un courant alternatif polyphasé,

au moins deux paires de circuits de commutation qui comprennent des transistors du type SiC-MOS en série, respectivement, sont reliés en parallèle l'une à l'autre entre des bornes afin de fournir en sortie ledit courant continu, et

lesdits bobinages de stator (41A à 41C) sont reliés à des points milieu respectifs desdits transistors de type MOS en série.

3. Alternateur selon la revendication 1 ou 2, dans lequel lesdits aimant permanents sont logés de façon intégrée à l'intérieur d'un corps de retenue fait de résine (21) présentant une propriété d'isolation thermique, et ledit corps de retenue est disposé entre lesdits pôles magnétiques respectifs du type de Lundell.

4. Alternateur selon la revendication 3, dans lequel ledit corps de retenue (21) est formé comme un anneau qui est replié de façon périodique de manière à s'étendre entre lesdits pôles magnétiques de type de Lundell qui s'étendent en alternance depuis une face avant et une face arrière dudit rotor suivant ladite direction circonférentielle, et lesdits aimant permanents (2A, 2B) sont logés dans les parties de branches repliées respectives (211) dudit corps de retenue (21).

5. Alternateur selon la revendication 3 ou 4, dans lequel des rebords (111) sont prévus par rapport aux pôles magnétiques du type de Lundell de manière à s'étendre depuis au moins deux bord latéraux circonférentiels de ceux-ci, et lesdits rebords butent sur la surface périphérique extérieure dudit corps de retenue.

6. Alternateur selon l'une quelconque des revendications 1 à 5, dans lequel ledit aimant permanent est un aimant de ferrite anisotrope ou un aimant de résine contenant de la poudre magnétique de terres rares.

7. Alternateur selon l'une quelconque des revendications 1 à 6, dans lequel ledit stator (4), ledit rotor (1) et ledit redresseur (51) sont logés de façon intégrée à l'intérieur d'un corps de carcasse (6, 61, 62, 77) dudit alternateur.

8. Alternateur selon la revendication 7, comportant en outre un ventilateur de refroidissement (15, 16) logé à l'intérieur dudit corps de carcasse.

# FIG. 1

# FIG. 2

# FIG. 3

# FIG. 4

# FIG. 5

# FIG. 9

# FIG. 6

# FIG. 7

# FIG. 8

FIG. 10

FIG. 11
PRIOR ART